# EUROPEAN PATENT APPLICATION

(11) **EP 4 648 361 A1**
(43) Date of publication of application: **12.11.2025**
(21) Application number: 23919424.4
(22) Date of filing: 15.11.2023
(51) Int. Cl.: H04L 12/46

(54) **MAC MIGRATION METHOD AND DEVICE**

(30) Priority: 30.01.2023 CN 202310090927
(71) Applicant: Huawei Technologies Co., Ltd., Shenzhen, Guangdong 518129 (CN)
(72) Inventor: ZHU, Tong, Shenzhen, Guangdong 518129 (CN); WANG, Haibo, Shenzhen, Guangdong 518129 (CN); REN, Huajun, Shenzhen, Guangdong 518129 (CN)
(74) Representative: Thun, Clemens
(86) International application number: PCT/CN2023/131681
(87) International publication number: WO 2024/159860

(57) **Abstract**

Embodiments of this application provide a media access control MAC migration method and device. The method includes: if a conflict between a first MAC route and a second MAC route is detected, selecting the second MAC route as an optimal MAC route; generating a MAC migration attribute for the optimal MAC route, and increasing a sequence number in the MAC migration attribute by a value to obtain a first sequence number; advertising the optimal MAC route including the MAC migration attribute; and receiving a withdrawal request of the first MAC route, and determining to use the optimal MAC route. This can ensure normal MAC migration and normal transmission of data traffic when a MAC route conflict occurs.

## Description

This application claims priority to Chinese Patent Application No. 202310090927.8, filed with the China National Intellectual Property Administration on January 30, 2023 and entitled "MAC MIGRATION METHOD AND DEVICE", which is incorporated herein by reference in its entirety.

### TECHNICAL FIELD

This application relates to the communication field, and in particular, to a media access control (Media Access Control, MAC) migration method and device.

### BACKGROUND

With development of communication technologies, in increasingly more network scenarios, a unknown MAC route (Unknown MAC Route, UMR) solution is used to advertise a UMR, namely, a MAC route with an all-0 MAC address, to reduce pressure on a device to learn a MAC route.

However, in a scenario in which the UMR is used for advertisement, normal MAC migration in the Ethernet virtual private network (Ethernet Virtual Private Network, EVPN) protocol cannot be identified once a MAC route conflict occurs, causing a data traffic error and a transmission exception.

### SUMMARY

This application provides a MAC migration method and device, to ensure normal MAC migration and normal transmission of data traffic when a MAC route conflict occurs.

According to a first aspect, this application provides a MAC migration method, including: if a conflict between a first MAC route and a second MAC route is detected, selecting the second MAC route as an optimal MAC route; generating a MAC migration attribute for the optimal MAC route, and increasing a sequence number in the MAC migration attribute by a value to obtain a first sequence number; advertising the optimal MAC route including the MAC migration attribute; and receiving a withdrawal request of the first MAC route, and determining to use the optimal MAC route.

The MAC migration method provided in this application is applicable to a UMR scenario, including a campus network scenario in which a UMR is used, a metropolitan area network scenario in which a UMR is used, and the like. In a possible implementation, in the campus network scenario in which the UMR is used, a border (border) device and at least two edge (edge) devices are included. When sensing two MAC routes with a same prefix but from different Ethernet segments (Ethernet Segments, ESs), the border (border) device senses a MAC route conflict, performs free route selection, and may select the second MAC route as the optimal MAC route, or select the first MAC route as the optimal route. After the MAC route conflict is detected, MAC migration needs to be performed. A MAC migration attribute is generated for the selected optimal MAC route, and a sequence number in the MAC migration attribute of the optimal MAC route is increased by a value to obtain the first sequence number. If the selected optimal MAC route is exactly sent by an edge (edge) device 2 from which a user goes online, after receiving the optimal MAC route, an edge (edge) device 1 from which the user no longer goes online withdraws the previously sent MAC route, and migration succeeds. In a possible implementation, in the metropolitan area network scenario in which the UMR is used, an access leaf node (Access Leaf, A-leaf (leaf) node) and a server leaf node (Server Leaf, S-leaf (leaf) node) are included. The A-leaf (leaf) node senses a MAC route conflict, determines a local MAC route as the optimal MAC route through free route selection, generates a MAC migration attribute for the selected optimal MAC route, increases a sequence number in the MAC migration attribute of the optimal MAC route by a value to obtain the first sequence number, and sends the optimal MAC route to the S-leaf (leaf) node. After receiving the optimal MAC route, the S-leaf (leaf) node withdraws the previously sent MAC route.

In a possible implementation, in the campus network scenario in which the UMR is used, if the selected optimal MAC route is not sent by the edge (edge) device 2 from which the user goes online, pre-migration is performed once. The method further includes: if the conflict between the first MAC route and the second MAC route is detected, selecting the first MAC route as the optimal MAC route. After the advertising the optimal MAC route including the MAC migration attribute, the method further includes: receiving a third MAC route, where a second sequence number in a MAC migration attribute of the third MAC route is obtained by increasing the first sequence number by a value; determining that the second sequence number is greater than the first sequence number of the optimal MAC route; advertising the third MAC route; and receiving the withdrawal request of the first MAC route, and determining to use the third MAC route.

In a possible implementation, the method further includes: receiving a fourth MAC route, where a third sequence number in a MAC migration attribute of the fourth MAC route is obtained by increasing the first sequence number by a value; and if it is determined that the third sequence number is greater than the first sequence number of the optimal MAC route, withdrawing the sent optimal MAC route.

For example, in the metropolitan area network scenario in which the UMR is used, after withdrawing the sent MAC route, the S-leaf (leaf) node performs re-learning, and sends, to the A-leaf (leaf) node through an EVPN, a fourth MAC route obtained through re-learning, where a third sequence number of the fourth MAC route is obtained by increasing the first sequence number of the previously received optimal MAC route by a value. After receiving the fourth MAC route, the A-leaf (leaf) node compares the sequence numbers in the migration attributes of the MAC routes, selects the fourth MAC route corresponding to the third sequence number, which is a larger sequence number, and withdraws the optimal MAC route previously sent to the S-leaf (leaf) node.

In this application, a value of a sequence number is changed, and a finally used MAC route is determined after comparison. For example, when route selection is correct, a MAC route with a larger sequence number is determined as the finally used MAC route. When route selection is incorrect, pre-migration can also be performed once based on comparison of sequence numbers, and finally a correct MAC route is selected and used. This ensures accuracy of MAC migration and ensures normal transmission of data traffic.

According to a second aspect, this application provides a MAC migration method, including:
learning of an advertisement, where the advertisement indicates an optimal MAC route, and a MAC migration attribute of the optimal MAC route includes a first sequence number by which a value is increased; and
if it is determined that the first sequence number is greater than a sequence number corresponding to a locally stored first MAC route, sending a withdrawal request, where the withdrawal request is used to withdraw the sent first MAC route.

In a possible implementation, the method further includes: learning of an advertisement, where the advertisement indicates a third MAC route, and a second sequence number in a MAC migration attribute of the third MAC route is obtained by increasing the first sequence number by a value; and if it is determined that the second sequence number is greater than the sequence number corresponding to the locally stored first MAC route, sending the withdrawal request, where the withdrawal request is used to withdraw the sent first MAC route.

In a possible implementation, the method further includes: obtaining a fourth MAC route through re-learning, and generating a MAC migration attribute for the fourth MAC route, where a third sequence number in the MAC migration attribute is obtained by increasing the first sequence number by a value; and sending the fourth MAC route.

According to a third aspect, this application provides a MAC migration method, including:
learning of an advertisement, where the advertisement indicates an optimal MAC route, and a migration attribute of the optimal MAC route includes a first sequence number by which a value is increased; if it is determined that the first sequence number is greater than a sequence number corresponding to a locally stored second MAC route, sending a withdrawal request, where the withdrawal request is used to withdraw the sent second MAC route; obtaining a third MAC route by re-learning a MAC address, and generating a MAC migration attribute for the third MAC route, where a second sequence number in the MAC migration attribute is obtained by increasing the first sequence number by a value; and sending the third MAC route.

According to a fourth aspect, this application provides a first device, including:
a processing module, configured to: if a conflict between a first MAC route and a second MAC route is detected, select the second MAC route as an optimal MAC route; generate a MAC migration attribute for the optimal MAC route; and increase a sequence number in the MAC migration attribute by a value to obtain a first sequence number; a sending module, configured to advertise the optimal MAC route including the MAC migration attribute; and a receiving module, configured to: receive a withdrawal request of the first MAC route, and determine to use the optimal MAC route.

In a possible implementation, the processing module is further configured to: if the conflict between the first MAC route and the second MAC route is detected, select the first MAC route as the optimal MAC route; the receiving module is further configured to receive a third MAC route, where a second sequence number in a MAC migration attribute of the third MAC route is obtained by increasing the first sequence number by a value; the processing module is further configured to determine that the second sequence number is greater than the first sequence number of the optimal MAC route; the sending module is further configured to advertise the third MAC route; and the receiving module is further configured to receive the withdrawal request of the first MAC route, and the processing module is further configured to determine to use the third MAC route.

In a possible implementation, the receiving module is further configured to receive a fourth MAC route, where a third sequence number in a MAC migration attribute of the fourth MAC route is obtained by increasing the first sequence number by a value; and the processing module is further configured to: if it is determined that the third sequence number is greater than the first sequence number of the optimal MAC route, withdraw the sent optimal MAC route.

According to a fifth aspect, this application provides a second device, including:
a receiving module, configured to learn of an advertisement, where the advertisement indicates an optimal MAC route, and a MAC migration attribute of the optimal MAC route includes a first sequence number by which a value is increased; and a processing module, configured to: if it is determined that the first sequence number is greater than a sequence number corresponding to a locally stored first MAC route, send, by a sending module, a withdrawal request, where the withdrawal request is used to withdraw the sent first MAC route.

In a possible implementation, the receiving module is further configured to learn of an advertisement, where the advertisement indicates a third MAC route, and a second sequence number in a MAC migration attribute of the third MAC route is obtained by increasing the first sequence number by a value; and the processing module is further configured to: if it is determined that the second sequence number is greater than the sequence number corresponding to the locally stored first MAC route, send the withdrawal request, where the withdrawal request is used to withdraw the sent first MAC route.

In a possible implementation, the processing module is further configured to: obtain a fourth MAC route through re-learning, and generate a MAC migration attribute for the fourth MAC route, where a third sequence number in the MAC migration attribute is obtained by increasing the first sequence number by a value; and the sending module is further configured to send the fourth MAC route.

According to a sixth aspect, this application provides a second device, including:
a receiving module, configured to learn of an advertisement, where the advertisement indicates an optimal MAC route, and a migration attribute of the optimal MAC route includes a first sequence number by which a value is increased; a processing module, configured to: if it is determined that the first sequence number is greater than a sequence number corresponding to a locally stored second MAC route, send a withdrawal request, where the withdrawal request is used to withdraw the sent second MAC route; obtain a third MAC route by re-learning a MAC address; and generate a MAC migration attribute for the third MAC route, where a second sequence number in the MAC migration attribute is obtained by increasing the first sequence number by a value; and a sending module, configured to send the third MAC route.

According to a seventh aspect, this application provides a network device. The network device includes a communication interface and a processor, the communication interface is configured to perform the method according to any one of the foregoing aspects and receiving and sending operations in any possible implementation of any one of the foregoing aspects, and the processor is configured to perform the method according to any one of the foregoing aspects and operations other than the receiving and sending operations in any possible implementation of any one of the foregoing aspects. For example, when the processor is configured as the first device according to the fourth aspect to perform the method according to the first aspect, the processor is configured to: if a conflict between a first MAC route and a second MAC route is detected, select the second MAC route as an optimal MAC route; generate a MAC migration attribute for the optimal MAC route; and increase a sequence number in the MAC migration attribute by a value to obtain a first sequence number. When the communication interface is configured as the first device according to the fourth aspect to perform the method according to the first aspect, the communication interface is configured to: advertise the optimal MAC route including the MAC migration attribute; receive a withdrawal request of the first MAC route, and determine to use the optimal MAC route; and the like.

According to an eighth aspect, this application provides a network device. The network device includes a processor, a storage medium (memory), and a transceiver. The storage medium (memory) stores instructions, and when the instructions are run by the processor and the transceiver, the method according to any one of the foregoing aspects and the method according to any possible implementation of any one of the foregoing aspects are performed.

According to a ninth aspect, this application provides a communication system. The communication system includes at least one first device provided in the fourth aspect and at least one second device provided in the second aspect or the third aspect. The first device is configured to perform some or all operations performed in the first aspect to the third aspect and any one of the possible implementations of the first aspect to the third aspect. The second device is configured to perform some or all operations performed in the first aspect to the third aspect and any one of the possible implementations of the first aspect to the third aspect.

According to a tenth aspect, this application provides a computer-readable storage medium. The computer-readable storage medium stores instructions, and when the instructions are run on a processor, the method according to any one of the foregoing aspects and some or all operations included in any possible implementation of any one of the foregoing aspects are implemented.

According to an eleventh aspect, this application provides a computer program product. The computer program product includes instructions, and when the instructions are run on a processor, the method according to any one of the foregoing aspects and some or all operations included in any possible implementation of any one of the foregoing aspects are implemented.

According to a twelfth aspect, this application provides a chip, including an interface circuit and a processor. The interface circuit is connected to the processor, and the processor is configured to enable the chip to perform the method according to any one of the foregoing aspects and some or all operations included in any possible implementation of any one of the foregoing aspects.

### BRIEF DESCRIPTION OF DRAWINGS

To describe the technical solutions in embodiments of this application more clearly, the following briefly introduces the accompanying drawings for describing embodiments of this application. Apparently, the accompanying drawings in the following descriptions show merely some embodiments of this application, and a person of ordinary skill in the art may still derive other drawings from these accompanying drawings without creative efforts.
FIG. 1 is a diagram of a structure of a campus network scenario in which a UMR is used according to an embodiment of this application;
FIG. 2 is a schematic flowchart of a MAC migration method in a UMR scenario according to an embodiment of this application;
FIG. 3 is a schematic flowchart of a MAC migration method in a campus network scenario in which a UMR is used according to an embodiment of this application;
FIG. 4 is a schematic flowchart of a MAC migration method in another campus network scenario in which a UMR is used according to an embodiment of this application;
FIG. 5 is a diagram of a structure of MAC migration in a metropolitan area network scenario in which a UMR is used according to an embodiment of this application;
FIG. 6 is a schematic flowchart of a MAC migration method in a metropolitan area network scenario in which a UMR is used;
FIG. 7 is a diagram of a structure of a first device according to an embodiment of this application;
FIG. 8 is a diagram of a structure of a second device according to an embodiment of this application;
FIG. 9 is a diagram of a structure of a network device 40 according to an embodiment of this application; and
FIG. 10 is a diagram of a structure of a network device 50 according to an embodiment of this application.

### DESCRIPTION OF EMBODIMENTS

To make a person skilled in the art understand the technical solutions in this application better, the following clearly and completely describes the technical solutions in embodiments of this application with reference to the accompanying drawings in embodiments of this application. It is clear that the described embodiments are merely some rather than all of embodiments of this application.

The term "and/or" in this specification describes only an association relationship for describing associated objects and represents that three relationships may exist. For example, A and/or B may represent the following three cases: Only A exists, both A and B exist, and only B exists.

In the specification and claims in embodiments of this application, the terms "first", "second", and so on are intended to distinguish between different objects but do not indicate a particular order of the objects. For example, a first target object, a second target object, and the like are used to distinguish between different target objects, but are not used to describe a specific order of the target objects.

In embodiments of this application, the word "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the word "example", "for example", or the like is intended to present a related concept in a specific manner.

In descriptions of embodiments of this application, unless otherwise stated, "plurality of" means two or more than two. For example, a plurality of processing units mean two or more processing units, and a plurality of systems mean two or more systems.

For ease of understanding, the following first explains and describes related nouns or terms used in embodiments of this application.
1. UMR scenario
   The UMR scenario is a solution in which sending of UMRs are used to replace releasing of all specific MAC routes in a standard EVPN.
2. Border (border)
   The border may be a border gateway node of a campus network to forward data between the campus network and an external network.
3. Edge (edge)
   The edge may be an edge node of a campus network, and traffic of an accessing user may enter the campus network through this node.
4. MAC route
   The MAC route is a type 2 route, namely, a MAC route/an internet protocol (Internet Protocol, IP) route, in EVPN route types, and is used to advertise a host MAC address, a host address resolution protocol (Address Resolution Protocol, ARP), and neighbor discovery (Neighbor Discovery, ND) protocol information.
5. UMR

The UMR indicates a MAC route with an all-0 MAC address.

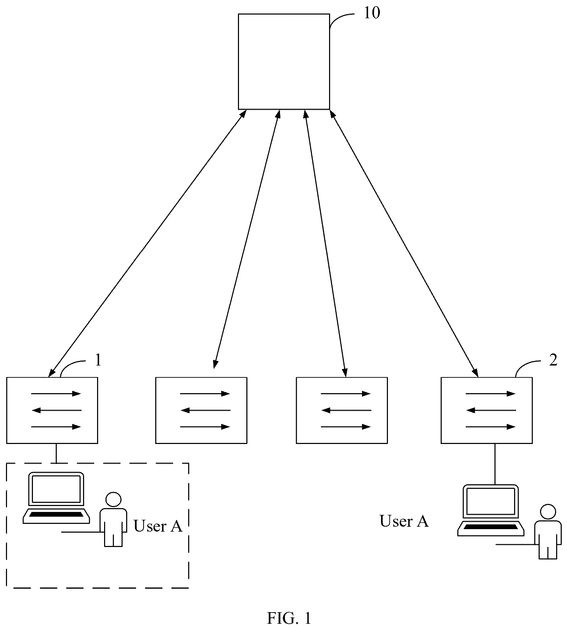

FIG. 1 is a diagram of a structure of a campus network scenario in which a UMR is used according to an embodiment of this application. An EVPN may be used as a protocol for distributing a service route in a campus network. As shown in FIG. 1, the campus network includes a first device and at least one second device. The first device may be a border (border) device 10 disposed on a border node, and the second device may be an edge (edge) device disposed on an edge node. An example in which the second device includes an edge (edge) device 1 and an edge (edge) device 2 is used for description. Refer to FIG. 1. If a user A logs in from the edge (edge) device 1, the edge (edge) device 1 can obtain a local MAC route, denoted as a first MAC route, by learning a local MAC address, and send the first MAC route to the border (border) device 10. The border (border) device 10 stores the first MAC route in a locally stored MAC table, and destination MAC of the first MAC route is MAC of the user A. In a non-UMR scenario, the border (border) device 10 advertises the received first MAC route downward, to be specific, advertises the received first MAC route to the edge (edge) device, for example, the edge (edge) device 2, so that the edge (edge) device 2 learns that the advertised first MAC route points to the edge (edge) device 1. However, in a UMR scenario, because the border (border) device 10 advertises the UMR to the edge (edge) device, and the edge (edge) devices do not exchange MAC routes obtained by the edge (edge) devices through learning, the edge (edge) device 2 obtains the UMR through learning from the border (border) device 10, and the edge (edge) device 2 does not learn that the border (border) device 10 has a first MAC route, that is, the first MAC route is not updated in the locally stored MAC table. In this case, if the edge (edge) device 2 has data traffic for accessing the user A (for example, the edge (edge) device 2 has data traffic that is of another user and that is for accessing the user A), and the edge (edge) device 2 searches the locally stored MAC table, but does not find that the destination MAC is the MAC of the user A, the edge (edge) device 2 forwards, to the border (border) device 10 through the UMR, the data traffic for accessing the user A, and the border (border) device 10 performs next step of processing. After that, if the user A goes online from the edge (edge) device 2, the edge (edge) device 2 obtains a local MAC route, denoted as a second MAC route, through learning, and sends the second MAC route to the border (border) device 10. The border (border) device 10 updates the second MAC route in the locally stored MAC table. In this way, if other data traffic for accessing the user A arrives at the border (border) device 10, the border (border) device 10 searches the locally stored MAC table again based on the destination MAC being the MAC of the user A. In this case, the first MAC route has been stored in the MAC table, and two MAC routes with a same prefix but from different ESs appear. The border (border) device 10 senses a MAC route conflict. As a result, the MAC route conflict occurs in the UMR scenario. The border (border) device 10 cannot determine, from the two received MAC routes, a MAC route that should be selected for the data traffic for accessing the user A, that is, a problem of abnormal data traffic sending occurs. For example, after the user A goes online from the edge (edge) device 2, the border (border) device 10 may still incorrectly send, to the edge (edge) device 1, the traffic for accessing the user A, that is, abnormal MAC migration occurs.

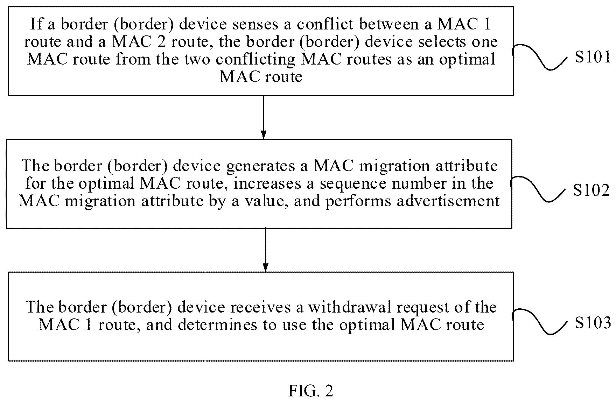

To resolve the problem of abnormal MAC migration in the UMR scenario, an embodiment of this application provides a MAC migration method in the UMR scenario, to enable MAC to be migrated normally, and further ensure that the border (border) device 10 correctly sends the data traffic. Refer to the campus network scenario provided in FIG. 1. An example is as follows: The first device may be the border (border) device 10, and the second device includes the edge (edge) device 1 and the edge (edge) device 2. The user A first goes online from the edge (edge) device 1, and the edge (edge) device 1 obtains the MAC route, denoted as a MAC 1 route, of the user A through learning, and sends the MAC 1 route to the border (border) device 10 through the EVPN. After a period of time, the user A goes online from the edge (edge) device 2, and the edge (edge) device 2 obtains the MAC route, denoted as a MAC 2 route, of the user A through learning, and sends the MAC 2 route to the border (border) device 10 through the EVPN. A conflict between the MAC 1 route and the MAC 2 route occurs. FIG. 2 is a schematic flowchart of a MAC migration method in a UMR scenario according to an embodiment of this application. As shown in FIG. 2, the method includes the following steps.

S101: If a border (border) device senses a conflict between a MAC 1 route and a MAC 2 route, the border (border) device selects one MAC route from the two conflicting MAC routes as an optimal MAC route.

Further, if the border (border) device senses the conflict between the MAC 1 route and the MAC 2 route, the border (border) device may select the MAC 2 route as the optimal MAC route, or select the MAC 1 route as the optimal MAC route.

After an edge (edge) device 1 sends the MAC 1 route to a border (border) device 10 through an EVPN, the border (border) device 10 stores the MAC 1 route corresponding to a user A in a MAC table, and a next hop of a selected route corresponding to the MAC 1 route stored in the MAC table is the edge (edge) device 1, where the MAC table is a set of MAC routes that have been locally stored in the border (border) device. According to a route transmission rule in the UMR scenario, the border (border) device 10 sends a UMR to an edge (edge) device in a campus network. The border (border) device 10 sends the UMR instead of the MAC 1 route to an edge (edge) device 2. After a period of time, if the user A is migrated to the edge (edge) device 2 and goes online, because the edge (edge) device 2 receives no MAC 1 route that is sent by the border (border) device 10 and that corresponds to the user A, based on trust of a local end, the edge (edge) device 2 obtains a MAC route, denoted as the MAC 2 route, of the user A through learning, and sends the MAC 2 route to the border (border) device 10 through the EVPN. The border (border) device 10 receives the MAC 2 route from the edge (edge) device 2, and stores the MAC 2 route corresponding to the user A in the MAC table, and a next hop of a selected route corresponding to the MAC 2 route stored in the MAC table is the edge (edge) device 2. Both the MAC 1 route and the MAC 2 route are MAC routes obtained by the user A through learning after the user A goes online from different edge (edge) devices. Therefore, the MAC 1 route and the MAC 2 route have a same prefix, but are not from a same ES. The next hop of the selected route corresponding to the MAC 1 route is the edge (edge) device 1, and the next hop of the selected route corresponding to the MAC 2 route is the edge (edge) device 2. The border (border) device 10 may sense two MAC routes with a same prefix. If it is determined that a MAC route conflict occurs, a next-hop edge (edge) device needs to be selected from the edge (edge) device 1 and the edge (edge) device 2, that is, route selection is performed.

S102: The border (border) device generates a MAC migration attribute for the optimal MAC route, increases a sequence number in the MAC migration attribute by a value, and performs advertisement.

In some examples, the border (border) device determines a selected MAC route as the optimal MAC route, increases the sequence number in the migration attribute by 1, and advertises the optimal MAC route outwards through the EVPN, where an initial value of the sequence number in the migration attribute may be set to 0. For example, if the border (border) device 10 determines that a currently selected route whose next hop is the edge (edge) device 2 is optimal, that is, determines the selected MAC 2 route as the optimal MAC route, the border (border) device 10 generates a MAC migration attribute for the MAC 2 route stored by the user A in the MAC table, increases a sequence number in the MAC migration attribute of the MAC 2 route by 1, and advertises the optimal MAC route outwards. The edge (edge) device 1 receives the advertisement. Optionally, the border (border) device may advertise the MAC 2 route to an edge (edge) device other than an edge (edge) device that sends the MAC 2 route. In this example, the border (border) device may advertise the MAC 2 route to the edge (edge) device 1. Alternatively, to improve advertisement efficiency, the border (border) device advertises the MAC 2 route to all edge (edge) devices in the campus network. In this example, the border (border) device may advertise the MAC 2 route to the edge (edge) device 1 and the edge (edge) device 2. After receiving the MAC 2 route, the edge (edge) device 2 discards the route because the route is generated by the local end.

Alternatively, if the border (border) device 10 determines that a currently selected route whose next hop is the edge (edge) device 1 is optimal, that is, determines the selected MAC 1 route as the optimal MAC route, the border (border) device 10 generates a MAC migration attribute for the MAC 1 route stored by the user A in the MAC table, increases a sequence number in the MAC migration attribute of the MAC 1 route by 1, and sends an advertisement to the edge (edge) device 2.

S103: The border (border) device receives a withdrawal request of the MAC 1 route, and determines to use the optimal MAC route.

In different application scenarios, the border (border) device 10 may select different MAC routes as optimal routes. If a currently selected route of the border (border) device 10 is the optimal route when the route is the edge (edge) device 2, it is determined that the MAC 2 route is the optimal MAC route, and the MAC 2 route including the MAC migration attribute is advertised to the edge (edge) device 1. In this case, the edge (edge) device 1 receives the MAC 2 route whose sequence number is 1, and selects the MAC 2 route from the border (border) device as the optimal route. The previously sent MAC 1 route is withdrawn, and MAC migration succeeds. If a currently selected route of the border (border) device 10 is the optimal route when the route is the edge (edge) device 1, it is determined that the MAC 1 route is the optimal MAC route, and the MAC 1 route including the MAC migration attribute is advertised to the edge (edge) device 1. In this case, the edge (edge) device 2 receives the MAC 1 route whose sequence number is 1, and selects the MAC 1 as the optimal. When traffic from the user A is for obtaining a local MAC address through learning on the edge (edge) device 2 again, after MAC migration is re-triggered, the migration succeeds.

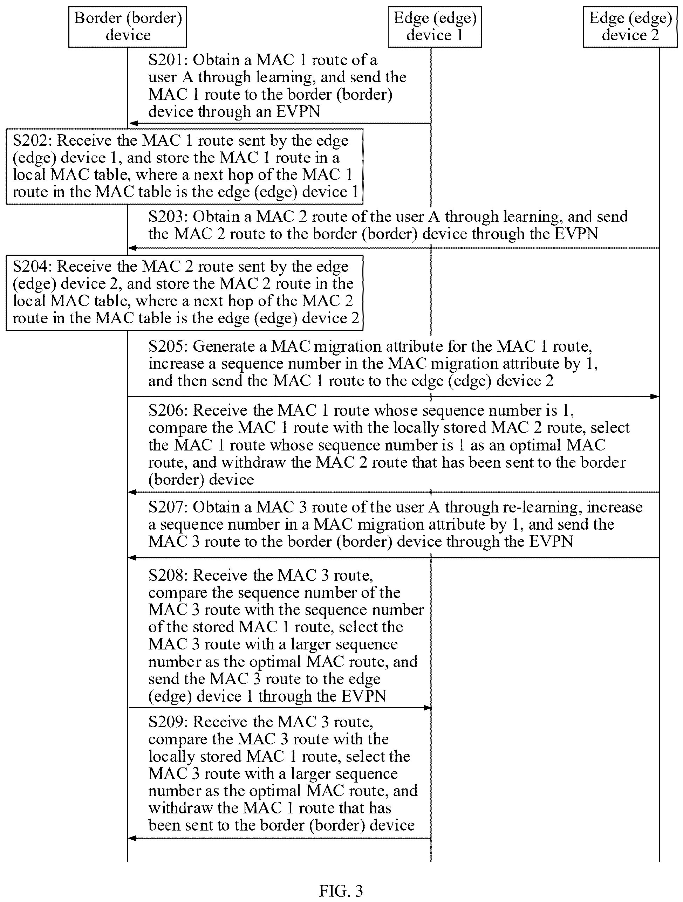

For further description, FIG. 3 is a schematic flowchart of a MAC migration method in a campus network scenario in which a UMR is used according to an embodiment of this application. As shown in FIG. 3, an example in which a border (border) device determines that a currently selected route whose next hop is an edge (edge) device 1 is optimal, that is, determines a selected MAC 1 route as an optimal MAC route is used for description. The method includes the following steps.

S201: The edge (edge) device 1 obtains a MAC 1 route of a user A through learning, and sends the MAC 1 route to the border (border) device through an EVPN.

The user A first goes online from the edge (edge) device 1. The edge (edge) device 1 obtains the MAC 1 route of the user A through learning, and sends the MAC 1 route to the border (border) device through the EVPN.

S202: The border (border) device receives the MAC 1 route sent by the edge (edge) device 1, and stores the MAC 1 route in a local MAC table, where a next hop of the MAC 1 route in the MAC table is the edge (edge) device 1.

S203: An edge (edge) device 2 obtains a MAC 2 route of the user A through learning, and sends the MAC 2 route to the border (border) device through the EVPN.

The user A is migrated to the edge (edge) device 2 and goes online. The edge (edge) device 2 obtains the MAC 2 route of the user through learning, and sends the MAC 2 route to the border (border) device through the EVPN.

S204: The border (border) device receives the MAC 2 route sent by the edge (edge) device 2, and stores the MAC 2 route in the local MAC table, where a next hop of the MAC 2 route in the MAC table is the edge (edge) device 2.

The border (border) device receives the MAC 2 route from the edge (edge) device 2. Because both the MAC 1 route and the MAC 2 route are obtained through learning after the user A goes online, a prefix of the MAC 1 route and a prefix of the MAC 2 route are the same, but the next hop of the MAC 1 route and the next hop of the MAC 2 route are different.

The border (border) device sends a UMR instead of a MAC route to the edge (edge) device. In this case, the border (border) device senses a MAC route conflict, and needs to perform route selection. In this example provided in this embodiment of this application, route selection includes the following two cases:
If the MAC 1 route is selected as an optimal route, refer to FIG. 3, after S204, the method further includes the following steps.

S205: The border (border) device generates a MAC migration attribute for the MAC 1 route, increases a sequence number in the MAC migration attribute by 1, and then sends the MAC 1 route to the edge (edge) device 2.

That is, S205 is equivalent to that the border (border) device performs "MAC pre-migration" once, where an initial value of the sequence number in the MAC 1 route may be 0 by default, and after the sequence number is increased by 1, the sequence number of the MAC 1 route is 1. An example in which a value by which the sequence number is increased each time is 1 is used, but this is not limited thereto.

Optionally, the border (border) device may advertise the route only to the edge (edge) device 2, for example, send the MAC 1 route to the edge (edge) device 2. Alternatively, to improve advertisement efficiency, the border (border) device advertises the route to all edge (edge) devices in a campus network. In this example, the border (border) device may send the MAC 1 route to the edge (edge) device 1 and the edge (edge) device 2. After receiving the MAC 1 route, the edge (edge) device 1 discards the route because the route is generated by a local end.

S206: The edge (edge) device 2 receives the MAC 1 route whose sequence number is 1, compares the MAC 1 route with the locally stored MAC 2 route, selects the MAC 1 route whose sequence number is 1 as the optimal MAC route, and withdraws the MAC 2 route that has been sent to the border (border) device.

In the locally stored MAC 2 route, an initial value of a sequence number is 0 by default. After comparison performed by the edge (edge) device 2, the sequence number being 1 of the MAC 1 route is greater. The edge (edge) device 2 selects a route with a larger sequence number as the optimal MAC route, that is, selects the MAC 1 route as the optimal MAC route, to replace the locally stored MAC 2 route, and withdraws the MAC 2 route previously sent to the border (border) device.

S207: The edge (edge) device 2 obtains a MAC 3 route of the user A through re-learning, increases a sequence number in a MAC migration attribute by 1, and sends the MAC 3 route to the border (border) device through the EVPN.

After comparing the sequence numbers, the edge (edge) device 2 reselects the MAC 1 route as the optimal MAC route, and traffic of the user A is for re-triggering the edge (edge) device 2 to obtain a local MAC route, denoted as the MAC 3 route, through learning. In this case, because a MAC route having a same prefix as the MAC 3 route is on a remote end, MAC route migration is generated once, and a MAC migration attribute is generated. The sequence number 1 of the optimal MAC route is increased by 1 to obtain a sequence number in the MAC migration attribute, and a sequence number of the MAC 3 route is 2.

S208: The border (border) device receives the MAC 3 route, compares the sequence number of the MAC 3 route with the sequence number of the stored MAC 1 route, selects the MAC 3 route with a larger sequence number as the optimal MAC route, and sends the MAC 3 route to the edge (edge) device 1 through the EVPN.

The sequence number of the MAC 1 route stored in the local MAC table is 1, and the sequence number of the received MAC 3 route sent by the edge (edge) device 2 is 2. After comparison, the border (border) device determines that the MAC 3 route whose sequence number is 2 is optimal, and sends the optimal MAC 3 route to the edge (edge) device 1 through the EVPN.

S209: The edge (edge) device 1 receives the MAC 3 route, compares the MAC 3 route with the locally stored MAC 1 route, selects the MAC 3 route with a larger sequence number as the optimal MAC route, and withdraws the MAC 1 route that has been sent to the border (border) device.

In this case, the user A has been migrated to the edge (edge) device 2 and goes online. The edge (edge) device 1 no longer obtains a new MAC route corresponding to the user A through learning without being triggered by using the traffic of the user A. In addition, in the campus network, both the border (border) device and the edge (edge) device 2 use the optimal MAC route, namely, the MAC 3 route, for transmission. This is equivalent to that the user A has been normally migrated to the edge (edge) device 2, and a MAC route conflict of the user A no longer occurs. The edge (edge) device 1 may send a withdrawal request, to withdraw the MAC 1 route that has been sent to the border (border) device.

Further, after receiving the MAC 3 route, the edge (edge) device 1 may further store the MAC 3 route for use when the route is subsequently required.

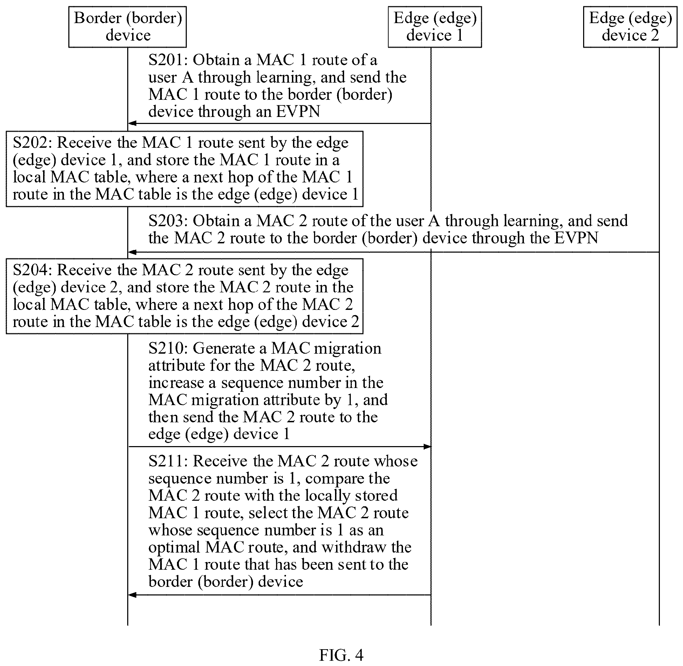

FIG. 4 is a schematic flowchart of a MAC migration method in another campus network scenario in which a UMR is used according to an embodiment of this application. A border (border) device senses a MAC route conflict, and needs to perform route selection. In this example provided in this embodiment of this application, if a MAC 2 route is selected as an optimal route, refer to FIG. 4, after S204, the method further includes the following steps.

S210: The border (border) device generates a MAC migration attribute for the MAC 2 route, increases a sequence number in the MAC migration attribute by 1, and then sends the MAC 2 route to the edge (edge) device 1.

That is, S210 is equivalent to that the border (border) device performs "MAC pre-migration" once, where an initial value of the sequence number in the MAC 2 route is 0 by default, and after the sequence number is increased by 1, the sequence number of the MAC 2 route is 1.

S211: The edge (edge) device 1 receives the MAC 2 route whose sequence number is 1, compares the MAC 2 route with the locally stored MAC 1 route, selects the MAC 2 route whose sequence number is 1 as the optimal MAC route, and withdraws the MAC 1 route that has been sent to the border (border) device.

In this case, the user A has been migrated to the edge (edge) device 2 and goes online. The edge (edge) device 1 no longer obtains a new MAC route corresponding to the user A through learning without being triggered by using the traffic of the user A. In addition, in the campus network, both the border (border) device and the edge (edge) device 2 use the optimal MAC route, namely, the MAC 2 route, for transmission. This is equivalent to that the user A has been normally migrated to the edge (edge) device 2, and a MAC route conflict of the user A no longer occurs.

The MAC 1 route, the MAC 2 route, and the MAC 3 route provided in this embodiment of this application are distinguished based on different sending bodies or different sending moments, and are all MAC routes obtained by the user A through learning when the user A goes online. MAC prefixes of the MAC routes obtained by the user A through learning when the user A goes online are consistent, but source ESs are inconsistent. Therefore, MAC migration is performed. In an actual application scenario, distinguishing between the MAC 1 route, the MAC 2 route, and the MAC 3 route is not limited. MAC migration may be performed for all MAC routes obtained by a same user through learning on different edge (edge) devices with reference to the example in this application.

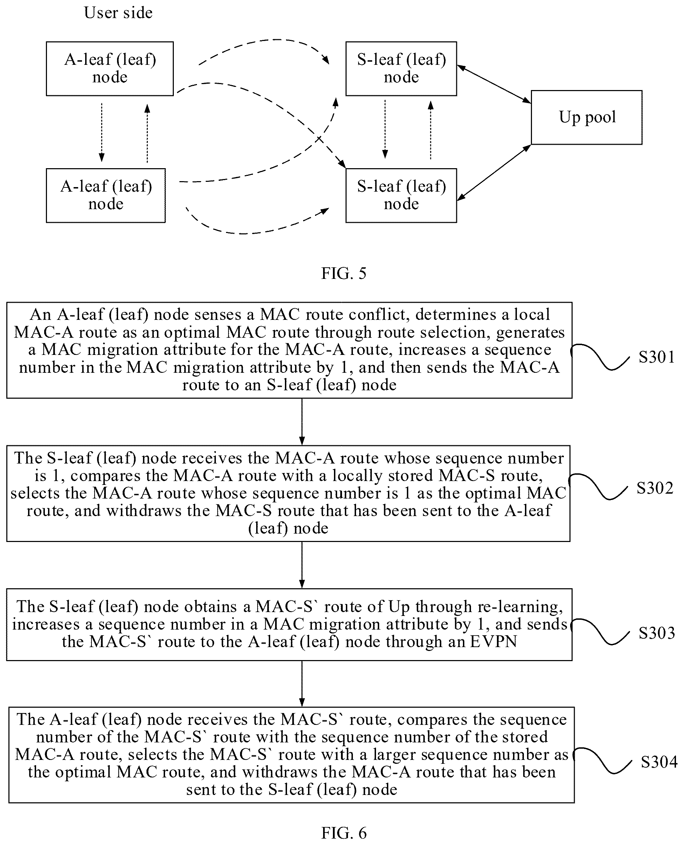

Further, FIG. 5 is a diagram of a structure of MAC migration in a metropolitan area network scenario in which a UMR is used according to an embodiment of this application. As shown in FIG. 5, in a metropolitan area network, with reference to a UMR technology, a first device may be an A-leaf (leaf) node connected to a user, and a second device may be an S-leaf (leaf) node. In a normal operating case, the A-leaf (leaf) node may obtain a MAC route (which is equivalent to a first MAC route) through learning from the S-leaf (leaf) node, and the S-leaf (leaf) node obtains a MAC route (which is equivalent to a second MAC route) by correspondingly learning a resource in an Up pool (namely, a broadband remote access server (Broadband Remote Access Server, BRAS)), where the Up pool is a resource pool, and includes a plurality of BRASs used by the user to perform device authentication. In the Up pool, each piece of Up corresponds to one BRAS, and this is equivalent to that each Up corresponds to one resource. If an access loop occurs, or a network exception such as an abnormal packet attack occurs, the first MAC route obtained by the A-leaf (leaf) node through learning is not learned from the S-leaf (leaf) node, but is a MAC route learned from a user side. The A-leaf (leaf) node senses a MAC route conflict. However, the A-leaf (leaf) node only advertises the UMR outwards (for example, in the scenario shown in FIG. 5, the A-leaf (leaf) node only advertises the UMR to the S-leaf (leaf) node). Therefore, when obtaining a MAC route of the Up through learning, the S-leaf (leaf) node cannot learn of a duplicate MAC route that has been obtained through learning on the A-leaf (leaf) node. As a result, a MAC migration function fails, and further, traffic sent from the user side to the Up cannot arrive at the Up. To avoid abnormal traffic sent from the user side to the Up due to the MAC route conflict, an embodiment of this application provides a MAC migration method shown in FIG. 6. FIG. 6 is a schematic flowchart of a MAC migration method in a metropolitan area network scenario in which a UMR is used. The method includes the following steps.

S301: An A-leaf (leaf) node senses a MAC route conflict, determines a local MAC-A route as an optimal MAC route through route selection, generates a MAC migration attribute for the MAC-A route, increases a sequence number in the MAC migration attribute by 1, and then sends the MAC-A route to an S-leaf (leaf) node.

In a scenario in which an access loop occurs or a network exception such as an abnormal packet attack occurs, the A-leaf (leaf) node incorrectly obtains the MAC route, denoted as the MAC-A route (which is equivalent to a first route), through learning on the S-leaf (leaf) node. If the MAC route is obtained through learning from the S-leaf (leaf) node through an EVPN, it is a normal behavior. If the MAC route is not obtained through learning from the S-leaf (leaf) node, it is an incorrect learning behavior. Based on that the A-leaf (leaf) node advertises only the UMR, the S-leaf (leaf) node cannot learn of the MAC-A route obtained through learning on the A-leaf (leaf) node, and obtains a duplicate MAC route, denoted as a MAC-S route (which is equivalent to a second route), through learning. In this case, if traffic needs to be used to access the S-leaf (leaf) node, a MAC table is searched on the A-leaf (leaf) node, and it is found that an egress for accessing the S-leaf (leaf) node is a next hop of the MAC-A route that is incorrectly learned by the A-leaf (leaf) node. Therefore, the traffic cannot arrive at the S-leaf (leaf) node, and a MAC route conflict occurs. The A-leaf (leaf) node always considers that the local route is optimal, and the local MAC-A route is determined as the optimal MAC route through route selection. Therefore, the MAC migration attribute is generated for the MAC-A route, the sequence number in the MAC migration attribute is increased by 1, and then the MAC-A route is sent to the S-leaf (leaf) node. That is, it is equivalent to that the A-leaf (leaf) node performs "MAC pre-migration" once, where an initial value of the sequence number in the MAC-A route may be 0 by default, and the sequence number is increased by 1, the sequence number of the MAC-A route is 1.

S302: The S-leaf (leaf) node receives the MAC-A route whose sequence number is 1, compares the MAC-A route with the locally stored MAC-S route, selects the MAC-A route whose sequence number is 1 as the optimal MAC route, and withdraws the MAC-S route that has been sent to the A-leaf (leaf) node.

In the MAC-S route locally stored by the S-leaf (leaf) node, the initial value of a sequence number is 0 by default. After the MAC-A route whose sequence number is 1 from the A-leaf (leaf) node is received, the MAC-A route is compared with the local MAC-S route, and the sequence number of the MAC-A route whose sequence number is 1 is greater than the sequence number of the MAC-S route. The MAC-A route is determined as the optimal MAC route, the MAC-A route is selected to replace the locally stored MAC-S route, and the MAC-S route previously sent to the A-leaf (leaf) node is withdrawn.

S303: The S-leaf (leaf) node obtains a MAC-S' route of Up through re-learning, increases a sequence number in a MAC migration attribute by 1, and sends the MAC-S' route to the A-leaf (leaf) node through the EVPN.

After comparing the MAC-A route and the MAC-S route, the S-leaf (leaf) node selects the MAC-A route as the optimal MAC route, until traffic from the Up is for obtaining a local MAC route, denoted as the MAC-S' route (which is equivalent to a fourth MAC route), through learning again on the S-leaf (leaf) node. In this case, MAC route migration is generated once, and a MAC migration attribute is generated. The sequence number 1 of the optimal MAC-A route is increased by 1 to obtain the sequence number in the MAC-S' route migration attribute, and the sequence number of the MAC-S' route is 2.

S304: The A-leaf (leaf) node receives the MAC-S' route, compares the sequence number of the MAC-S' route with the sequence number of the stored MAC-A route, selects the MAC-S' route with a larger sequence number as the optimal MAC route, and withdraws the MAC-A route that has been sent to the S-leaf (leaf) node.

Both the A-leaf (leaf) node and the S-leaf (leaf) node determine the MAC-S' route as the optimal MAC route. MAC migration succeeds, and traffic sent from a user side to the Up is restored.

The MAC-A route and the MAC-S route provided in this embodiment of this application are distinguished based on different content learned by the node, and are merely examples. In an actual application scenario, the distinguishing is not limited.

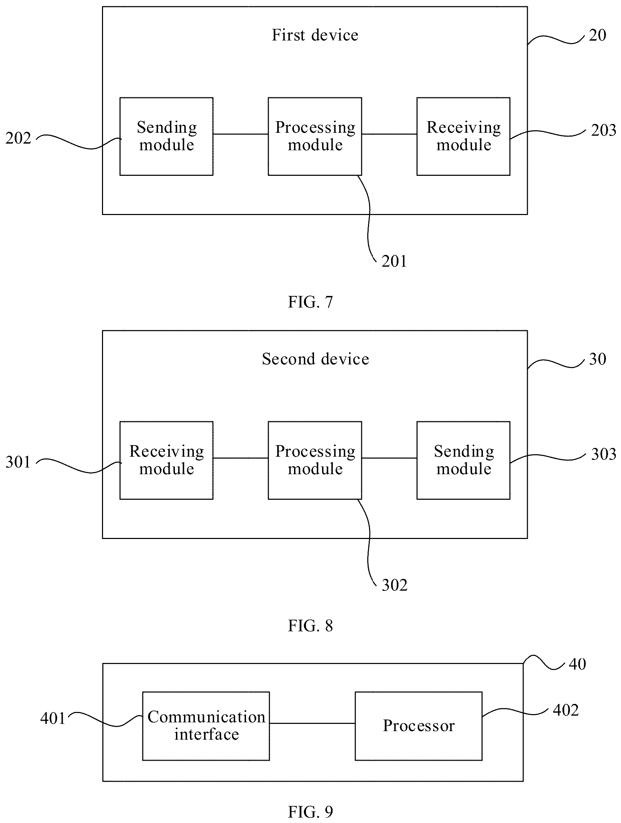

FIG. 7 is a diagram of a structure of a first device according to an embodiment of this application. The first device 20 includes a processing module 201, a sending module 202, and a receiving module 203.

The processing module 201 is configured to: if a conflict between a first MAC route and a second MAC route is detected, select the second MAC route as an optimal MAC route; generate a MAC migration attribute for the optimal MAC route; and increase a sequence number in the MAC migration attribute by a value to obtain a first sequence number.

The sending module 202 is configured to advertise the optimal MAC route including the MAC migration attribute.

The receiving module 203 is configured to: receive a withdrawal request of the first MAC route, and determine to use the optimal MAC route.

Optionally, the processing module 201 is further configured to: if the conflict between the first MAC route and the second MAC route is detected, select the first MAC route as the optimal MAC route.

The receiving module 203 is further configured to receive a third MAC route, where a second sequence number in a MAC migration attribute of the third MAC route is obtained by increasing the first sequence number by a value.

The processing module 201 is further configured to determine that the second sequence number is greater than the first sequence number of the optimal MAC route.

The sending module 202 is further configured to advertise the third MAC route.

The receiving module 203 is further configured to receive the withdrawal request of the first MAC route, and the processing module is further configured to determine to use the third MAC route.

It should be understood that the modules shown in FIG. 7 are merely examples. The processing module 201, the sending module 202, and the receiving module 203 may perform operations of the processing module 201, the sending module 202, and the receiving module 203 with reference to the method part in embodiments of this application, or perform variations of the operations of the processing module 201, the sending module 202, and the receiving module 203. For example, the first device 20 is applicable to a campus network scenario of a UMR, and may be used as a border (border) device to perform operations of the first device 20, or perform variations of the operations of the first device 20.

In a possible manner, the receiving module 203 in the first device 20 is further configured to receive a fourth MAC route, where a third sequence number in a MAC migration attribute of the fourth MAC route is obtained by increasing the first sequence number by a value. The processing module 201 is further configured to: if it is determined that the third sequence number is greater than the first sequence number of the optimal MAC route, withdraw the sent optimal MAC route.

For example, the first device 20 is applicable to a metropolitan area network scenario in which a UMR is used, and performs operations of the first device 20 as an A-leaf (leaf) node, or performs variants of the operations of the first device 20.

FIG. 8 is a diagram of a structure of a second device according to an embodiment of this application. The second device 30 includes a receiving module 301, a processing module 302, and a sending module 303.

The receiving module 301 is configured to learn of an advertisement, where the advertisement indicates an optimal MAC route, and a MAC migration attribute of the optimal MAC route includes a first sequence number by which a value is increased.

The processing module 302 is configured to: if it is determined that the first sequence number is greater than a sequence number corresponding to a locally stored first MAC route, send, by the sending module 303, a withdrawal request, where the withdrawal request is used to withdraw the sent first MAC route.

Optionally, the receiving module 301 is further configured to learn of an advertisement, where the advertisement indicates a third MAC route, and a second sequence number in a MAC migration attribute of the third MAC route is obtained by increasing the first sequence number by a value.

The processing module 302 is further configured to: if it is determined that the second sequence number is greater than the sequence number corresponding to the locally stored first MAC route, send the withdrawal request, where the withdrawal request is used to withdraw the sent first MAC route.

It should be understood that the modules shown in FIG. 8 are merely examples. The receiving module 301, the processing module 302, and the sending module 303 may perform operations of the receiving module 301, the processing module 302, and the sending module 303 with reference to the method part in embodiments of this application, or perform variations of the operations of the receiving module 301, the processing module 302, and the sending module 303. For example, the second device 30 is applicable to a campus network scenario of a UMR, and may be used as an edge (edge) device 1 to perform operations of the second device 30, or perform variations of the operations of the second device 30.

In a possible manner, in the second device 30, the processing module 302 is further configured to: obtain a fourth MAC route through re-learning, and generate a MAC migration attribute for the fourth MAC route, where a third sequence number in the MAC migration attribute is obtained by increasing the first sequence number by a value; and the sending module 303 is further configured to send the fourth MAC route.

For example, the second device 30 is applicable to a metropolitan area network scenario in which a UMR is used, and performs operations of the second device 30 as an S-leaf (leaf) node, or performs variations of the operations of the second device 30.

In a possible manner, the second device 30 is applicable to a campus network scenario of a UMR, and performs operations of the second device 30 as an edge (edge) device 2, or performs variants of the operations of the second device 30. The receiving module 302 is configured to learn of an advertisement, where the advertisement indicates an optimal first MAC route, and a migration attribute of the optimal MAC route includes a first sequence number by which a value is increased.

The processing module 301 is configured to: if it is determined that the first sequence number is greater than a sequence number corresponding to a locally stored second MAC route, send a withdrawal request, where the withdrawal request is used to withdraw the sent second MAC route; obtain a third MAC route by re-learning a MAC address; and generate a MAC migration attribute for the third MAC route, where a second sequence number in the MAC migration attribute is obtained by increasing the first sequence number by a value.

The sending module 303 is configured to send the third MAC route.

In addition, an embodiment of this application further provides a network device 40. FIG. 9 is a diagram of a structure of a network device 40 according to an embodiment of this application. The network device 40 includes a communication interface 401 and a processor 402 connected to the communication interface 401. The communication interface 401 is, for example, an apparatus such as a transceiver. The network device 40 may be configured to perform the method in the foregoing embodiments. Specifically, in a campus network scenario of a UMR, the network device 40 may be used as a first device to perform operations performed by the border (border) device in methods S101 to S103 and S201 to S211; or in a metropolitan area network scenario of a UMR, the network device 40 may be used as a first device to perform operations performed by the A-leaf (leaf) node in methods S301 to S304. The communication interface 401 is configured to perform receiving and sending operations performed by an ingress node in the method. The processor 402 is configured to perform operations other than the receiving and sending operations performed by the ingress node in the method.

Alternatively,
in a campus network scenario of a UMR, the network device 40 may be used as a second device to perform operations performed by the edge (edge) devices (including the edge (edge) device 1 and the edge (edge) device 2) in methods S101 to S103 and S201 to S211; or in a metropolitan area network scenario of a UMR, the network device 40 may be used as a second device to perform operations performed by the S-leaf (leaf) node in methods S301 to S304. The communication interface 401 is configured to perform receiving and sending operations performed by an ingress node in the method. The processor 402 is configured to perform operations other than the receiving and sending operations performed by the ingress node in the method.

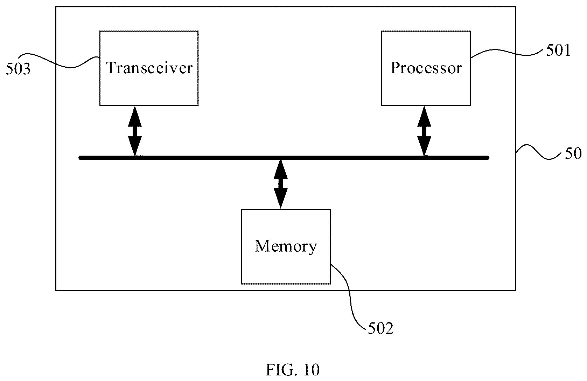

In addition, an embodiment of this application further provides a network device 50. FIG. 10 is a diagram of a structure of a network device 50 according to an embodiment of this application. As shown in FIG. 10, the network device 50 may include a processor 501, a memory 502 coupled to the processor 501, and a transceiver 503. The transceiver 503 may be a communication interface, an optical module, or the like, and is configured to receive a packet, data information, or the like. The processor 501 may be a central processing unit (Central Processing Unit, CPU), a network processor (Network Processor, NP), or a combination of the CPU and the NP, and is configured to perform steps related to forwarding processing in the device described in the example in the foregoing embodiments. The processor may alternatively be an application-specific integrated circuit (application-specific integrated circuit, ASIC), a programmable logic device (Programmable Logic Device, PLD), or a combination thereof. The PLD may be a complex programmable logic device (Complex Programmable Logic Device, CPLD), a field programmable gate array (Field Programmable Gate Array, FPGA), generic array logic (generic array logic, GAL), or any combination thereof. The processor 501 may be one processor, or may include a plurality of processors. The memory 502 may include a volatile memory (volatile memory), for example, a random access memory (Random Access Memory, RAM). The memory may also include a non-volatile memory (non-volatile memory), for example, a read-only memory (Read-Only Memory, ROM), a flash memory (flash memory), a hard disk drive (Hard Disk Drive, HDD), or a solid-state drive (Solid-State Drive, SSD). The memory 502 may further include a combination of the foregoing types. The memory 502 may be one memory, or may include a plurality of memories, and is configured to store program instructions. In an implementation, the memory 502 stores computer-readable instructions, and the computer-readable instructions include a plurality of software modules, for example, a sending module, a processing module, and a receiving module. After executing each software module, the processor 501 may perform a corresponding operation based on an indication of each software module. In this embodiment, an operation performed by a software module is actually an operation performed by the processor 501 based on an indication of the software module. Optionally, the processor 501 may also store program code or instructions for performing the solutions in embodiments of this application. In this case, the processor 501 does not need to read the program code or the instructions from the memory 502.

The network device 50 may be configured to perform the method in the foregoing embodiments. Specifically, in a campus network scenario of a UMR, the network device 50 may be used as a first device to perform operations performed by the border (border) device in methods S101 to S103 and S201 to S211; or in a metropolitan area network scenario of a UMR, the network device 50 may be used as a first device to perform operations performed by the A-leaf (leaf) node in methods S301 to S304. The transceiver 503 is configured to perform receiving and sending operations performed by an ingress node in the method. The processor 501 is configured to perform operations other than the receiving and sending operations performed by the ingress node in the method, and the memory 502 is configured to store an operation, a MAC table, and the like.

Alternatively,
In a campus network scenario of a UMR, the network device 50 may be used as a second device to perform operations performed by the edge (edge) devices (including the edge (edge) device 1 and the edge (edge) device 2) in methods S101 to S103 and S201 to S211; or in a metropolitan area network scenario of a UMR, the network device 50 may be used as a second device to perform operations performed by the S-leaf (leaf) node in methods S301 to S304. The transceiver 503 is configured to perform receiving and sending operations performed by an ingress node in the method. The processor 501 is configured to perform operations other than the receiving and sending operations performed by the ingress node in the method, and the memory 502 is configured to store an operation, a MAC table, and the like.

An embodiment of this application further provides a computer-readable storage medium. The computer-readable storage medium stores instructions. When the instructions are run on a processor, some or all operations in any method in any one of the foregoing embodiments are implemented.

An embodiment of this application further provides a computer program product, including a computer program. When the computer program is run on a processor, some or all operations in any method in any one of the foregoing embodiments are implemented.

An embodiment of this application further provides a communication system. The system may be used in the scenarios shown in FIG. 1 to FIG. 6, and includes at least one first device and at least one second device. The communication system is configured to implement some or all operations in any method in any one of the foregoing embodiments.

An embodiment of this application further provides a chip, including an interface circuit and a processor. The interface circuit is connected to the processor, and the processor is configured to enable the chip to perform some or all operations in any method in any one of the foregoing embodiments.

An embodiment of this application further provides a chip system, including a processor. The processor is coupled to a memory. The memory is configured to store a program or instructions. When the program or the instructions are executed by the processor, the chip system is enabled to implement some or all operations in any method in any one of the foregoing embodiments.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may be one or more memories in the chip system. The memory may be integrated with the processor, or may be disposed separately from the processor. This is not limited in embodiments of this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in this embodiment of this application.

For example, the chip system may be a field programmable logic gate array (Field Programmable Gate Array, FPGA), may be an application-specific integrated circuit (Application-Specific Integrated Circuit, ASIC), may be a system on chip (system on chip, SoC), may be a CPU, may be a digital signal processing circuit (digital signal processor, DSP), may be a microcontroller (microcontroller unit, MCU), may be a programmable controller (programmable logic device, PLD), or may be another integrated chip.

In the specification, claims, and accompanying drawings of this application, the terms "first", "second", "third", and so on (if existent) are intended to distinguish between similar objects but do not necessarily indicate a specific order or sequence. It should be understood that the data termed in such a way are interchangeable in proper circumstances so that embodiments described herein can be implemented in other orders than the order illustrated or described herein. In addition, the terms "include" and "have" and any other variants are intended to cover a non-exclusive inclusion. For example, a process, method, system, product, or device that includes a series of steps or units is not necessarily limited to those expressly listed steps or units, but may include other steps or units not expressly listed or inherent to the process, method, product, or device.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person skilled in the art should be aware that in the foregoing one or more examples, functions described in embodiments of this application may be implemented by hardware, software, firmware, or any combination thereof. When the functions are implemented by the software, the foregoing functions may be stored in a computer-readable medium or transmitted as one or more instructions or code in a computer-readable medium. The computer-readable medium includes a computer storage medium and a communication medium, where the communication medium includes any medium that enables a computer program to be transmitted from one place to another. The storage medium may be any available medium accessible to a general-purpose or a dedicated computer.

The foregoing describes embodiments of this application with reference to the accompanying drawings. However, this application is not limited to the foregoing specific implementations. The foregoing specific implementations are merely examples, but are not limitative. Inspired by this application, a person of ordinary skill in the art may further make modifications without departing from the purposes of this application and the protection scope of the claims, and all the modifications shall fall within the protection of this application.

## Claims

1. A MAC migration method, comprising:
if a conflict between a first media access control MAC route and a second MAC route is detected, selecting the second MAC route as an optimal MAC route;
generating a MAC migration attribute for the optimal MAC route, and increasing a sequence number in the MAC migration attribute by a value to obtain a first sequence number;
advertising the optimal MAC route comprising the MAC migration attribute; and
receiving a withdrawal request of the first MAC route, and determining to use the optimal MAC route.

2. The method according to claim 1, further comprising:
if the conflict between the first MAC route and the second MAC route is detected, selecting the first MAC route as the optimal MAC route; and
after the advertising the optimal MAC route comprising the MAC migration attribute, the method further comprises:
receiving a third MAC route, wherein a second sequence number in a MAC migration attribute of the third MAC route is obtained by increasing the first sequence number by a value;
determining that the second sequence number is greater than the first sequence number of the optimal MAC route;
advertising the third MAC route; and
receiving the withdrawal request of the first MAC route, and determining to use the third MAC route.

3. The method according to claim 1, further comprising:
receiving a fourth MAC route, wherein a third sequence number in a MAC migration attribute of the fourth MAC route is obtained by increasing the first sequence number by a value; and
if it is determined that the third sequence number is greater than the first sequence number of the optimal MAC route, withdrawing the sent optimal MAC route.

4. A MAC migration method, comprising:
learning of an advertisement, wherein the advertisement indicates an optimal media access control MAC route, and a MAC migration attribute of the optimal MAC route comprises a first sequence number by which a value is increased; and
if it is determined that the first sequence number is greater than a sequence number corresponding to a locally stored first MAC route, sending a withdrawal request, wherein the withdrawal request is used to withdraw the sent first MAC route.

5. The method according to claim 4, further comprising:
learning of an advertisement, wherein the advertisement indicates a third MAC route, and a second sequence number in a MAC migration attribute of the third MAC route is obtained by increasing the first sequence number by a value; and
if it is determined that the second sequence number is greater than the sequence number corresponding to the locally stored first MAC route, sending the withdrawal request, wherein the withdrawal request is used to withdraw the sent first MAC route.

6. The method according to claim 4, further comprising:
obtaining a fourth MAC route through re-learning, and generating a MAC migration attribute for the fourth MAC route, wherein a third sequence number in the MAC migration attribute is obtained by increasing the first sequence number by a value; and
sending the fourth MAC route.

7. A MAC migration method, comprising:
learning of an advertisement, wherein the advertisement indicates an optimal media access control MAC route, and a migration attribute of the optimal MAC route comprises a first sequence number by which a value is increased;
if it is determined that the first sequence number is greater than a sequence number corresponding to a locally stored second MAC route, sending a withdrawal request, wherein the withdrawal request is used to withdraw the sent second MAC route;
obtaining a third MAC route by re-learning a MAC address, and generating a MAC migration attribute for the third MAC route, wherein a second sequence number in the MAC migration attribute is obtained by increasing the first sequence number by a value; and
sending the third MAC route.

8. A first device, comprising:
a processing module, configured to: if a conflict between a first media access control MAC route and a second MAC route is detected, select the second MAC route as an optimal MAC route; generate a MAC migration attribute for the optimal MAC route; and increase a sequence number in the MAC migration attribute by a value to obtain a first sequence number;
a sending module, configured to advertise the optimal MAC route comprising the MAC migration attribute; and
a receiving module, configured to: receive a withdrawal request of the first MAC route, and determine to use the optimal MAC route.

9. The device according to claim 8, wherein
the processing module is further configured to: if the conflict between the first MAC route and the second MAC route is detected, select the first MAC route as the optimal MAC route;
the receiving module is further configured to receive a third MAC route, wherein a second sequence number in a MAC migration attribute of the third MAC route is obtained by increasing the first sequence number by a value;
the processing module is further configured to determine that the second sequence number is greater than the first sequence number of the optimal MAC route;
the sending module is further configured to advertise the third MAC route; and
the receiving module is further configured to receive the withdrawal request of the first MAC route, and the processing module is further configured to determine to use the third MAC route.

10. The device according to claim 8, wherein
the receiving module is further configured to receive a fourth MAC route, wherein a third sequence number in a MAC migration attribute of the fourth MAC route is obtained by increasing the first sequence number by a value; and
the processing module is further configured to: if it is determined that the third sequence number is greater than the first sequence number of the optimal MAC route, withdraw the sent optimal MAC route.

11. A second device, comprising:
a receiving module, configured to learn of an advertisement, wherein the advertisement indicates an optimal media access control MAC route, and a MAC migration attribute of the optimal MAC route comprises a first sequence number by which a value is increased; and
a processing module, configured to: if it is determined that the first sequence number is greater than a sequence number corresponding to a locally stored first MAC route, send, by a sending module, a withdrawal request, wherein the withdrawal request is used to withdraw the sent first MAC route.

12. The device according to claim 11, wherein
the receiving module is further configured to learn of an advertisement, wherein the advertisement indicates a third MAC route, and a second sequence number in a MAC migration attribute of the third MAC route is obtained by increasing the first sequence number by a value; and
the processing module is further configured to: if it is determined that the second sequence number is greater than the sequence number corresponding to the locally stored first MAC route, send the withdrawal request, wherein the withdrawal request is used to withdraw the sent first MAC route.

13. The device according to claim 11, wherein
the processing module is further configured to: obtain a fourth MAC route through re-learning, and generate a MAC migration attribute for the fourth MAC route, wherein a third sequence number in the MAC migration attribute is obtained by increasing the first sequence number by a value; and
the sending module is further configured to send the fourth MAC route.

14. A second device, comprising:
a receiving module, configured to learn of an advertisement, wherein the advertisement indicates an optimal media access control MAC route, and a migration attribute of the optimal MAC route comprises a first sequence number by which a value is increased;
a processing module, configured to: if it is determined that the first sequence number is greater than a sequence number corresponding to a locally stored second MAC route, send a withdrawal request, wherein the withdrawal request is used to withdraw the sent second MAC route; obtain a third MAC route by re-learning a MAC address; and generate a MAC migration attribute for the third MAC route, wherein a second sequence number in the MAC migration attribute is obtained by increasing the first sequence number by a value; and
a sending module, configured to send the third MAC route.
